# EUROPEAN PATENT APPLICATION

(11) **EP 1 741 754 A1**
(43) Date of publication of application: **10.01.2007**
(21) Application number: 05728806.0
(22) Date of filing: 06.04.2005
(51) Int. Cl.: C08L 77/00, C08K 3/32, C08K 5/3492, C08K 5/5313, C08L 101/00

(54) **FLAME-RETARDANT RESIN COMPOSITION**

(30) Priority: 28.04.2004 JP 2004132776
(71) Applicant: Ube Industries, Ltd., Ube-Shi, Yamaguchi 755-8633 (JP)
(72) Inventor: URATA, Yoshihiro c/o Ube Chemical Factory, Ube Ind, Yamaguchi 755-8633 (JP); YASUI, Tetsuya c/o Ube Chemical Factory, Ube Indus, Yamaguchi 755-8633 (JP)
(74) Representative: Grünecker, Kinkeldey, Stockmair & Schwanhäusser Anwaltssozietät
(86) International application number: PCT/JP2005/006760
(87) International publication number: WO 2005/105924

(57) **Abstract**

There is provided a flame-retardant resin composition which is excellent in flame retardancy and has excellent impact properties.

A flame-retardant resin composition containing:
(A) a polyamide resin;
(B) a flame retardant containing (b1) a phosphinic acid salt represented by the following formula (I) and/or (b2) a diphosphinic acid salt represented by the following formula (II) and/or a polymer containing at least one of these (b1) and (b2) as a component B1 and containing (b3) a melamine condensation product and/or (b4) a reaction product of melamine with phosphoric acid and/or (b5) a reaction product of a melamine condensation product with phosphoric acid and/or a mixture containing at least two of these (b3) to (b5) as a component B2;
(C) red phosphorus;
(D) an impact-resistant material; and
(E) an inorganic filler.

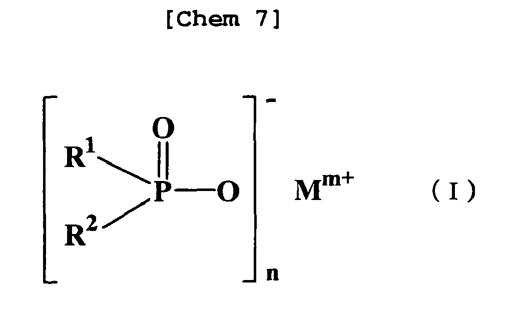

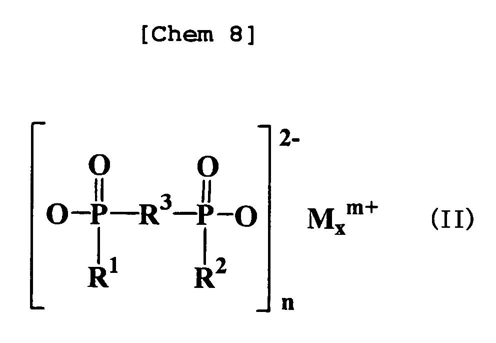

## Description

### Technical Field

The present invention relates to a flame-retardant resin composition which is excellent in flame retardancy and has excellent impact properties.

### Background Art

Reinforced flame retardant polyamide resins wherein inorganic fillers are added to flame retardant polyamide resins have widely been used as automobile parts and electrical parts such as power breakers, electromagnetic switches, wiring connectors, power tools, and the like owing to their excellent mechanical properties.
As the flame retardant polyamide resins, there have been employed those wherein triazine-based compounds, halogen compounds, magnesium hydroxide, or red phosphorus are mixed as flame retardants but each has problem(s).

The resin compositions containing triazine compounds such as melamine cyanurate cannot suppress generation of ammonia gas, amine-based gases, cyan gas, and the like at processing or in case of fire. Moreover, for these compounds, difficulty of realizing a sufficient flame retardant effect in reinforced polyamide compositions and a low decomposition temperature are enumerated as defects (see Patent Document 1 for melamine cyanurate and Patent Document 2 for melem).
The resin compositions to which halogen compounds are mixed have problems that corrosive decomposition gases may be generated during molding and processing to corrode molding machines and metal molds, and harmful substances may be generated during incineration to contaminate the environment.
Magnesium hydroxide is a non-toxic non-halogen flame retardant and results in no problems of toxic gases and corrosion of processing machines, and the like. However, in order to realize a sufficient flame retardancy, addition of a large amount of the compound is necessary but when a large amount is added, there arises a problem of decreased mechanical properties such as strength and impact-resistance. Moreover, it is also difficult to obtain a good appearance of molded articles.
The resin compositions to which red phosphorus is mixed may possibly generate a toxic phosphine gas through decomposition of red phosphorus at molding and processing and hence are not preferred in view of safety. Moreover, the incorporation of a large amount may result in a problem of decreased toughness such as impact resistance.

Furthermore, there have been also proposed a flame retardant combination of (i) a phosphinic acid salt and (ii) melamine or a melamine compound, e.g., melamine cyanurate or melamine phosphate (see Patent Document 3) and a flame retardant combination of (iii) a phosphinic acid salt and (iva) a melamine condensation product or (ivb) a reaction product of melamine or a melamine condensation product with phosphoric acid (see Patent Document 4).
The flame retardancy is improved by mixing these flame retardant combinations. On the other hand, when an impact-resistant material is further mixed for the purpose of improving the impact properties of the polyamide resin, there arises a problem of decreased flame retardancy.

Patent Document 1: JP-A-53-31759
Patent Document 2: JP-A-58-45352
Patent Document 3: JP-T-2000-508365
Patent Document 4: JP-A-2001-72978

### Disclosure of the Invention

### Problems that the Invention is to Solve

An object of the invention is to solve the above problems and provide a flame-retardant resin composition which is excellent in flame retardancy and has excellent impact properties.

### Means for Solving the Invention

The invention relates to a flame-retardant resin composition comprising:
(A) a polyamide resin;
(B) a flame retardant containing (b1) a phosphinic acid salt represented by the following formula (I) and/or (b2) a diphosphinic acid salt represented by the following formula (II) and/or a polymer comprising at least one of these (b1) and (b2) as a component B1 and containing (b3) a melamine condensation product and/or (b4) a reaction product of melamine with phosphoric acid and/or (b5) a reaction product of a melamine condensation product with phosphoric acid and/or a mixture comprising at least two of these (b3) to (b5) as a component B2;
(C) red phosphorus;
(D) an impact-resistant material; and
(E) an inorganic filler:

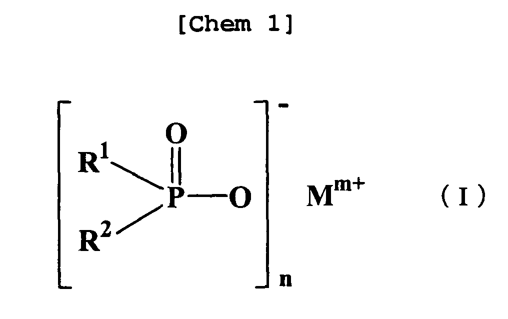

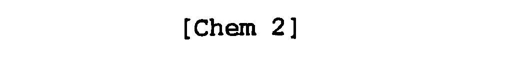

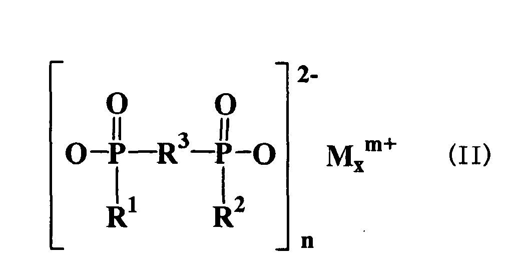

wherein R¹ and R² are the same or different and are linear or branched C₁-C₆ alkyl and/or aryl, R³ is linear or branched C₁-C₁₀ alkylene, C₆-C₁₀ arylene, C₆-C₁₀ alkylarylene, or C₆-C₁₀ arylalkylene, M is a calcium ion, a magnesium ion, an aluminum ion, and/or a zinc ion, m is 2 or 3, n is 1 or 3, and x is 1 or 2.

### Advantage of the Invention

Since the above flame-retardant resin composition is excellent in flame retardancy and also has excellent impact properties, it can be suitably used in applications, e.g., automobile parts, machine parts, circuit breaker parts, electrical and electronic parts such as power tools, electrical connectors, and personal computer cases, and the like and is extremely useful as a non-halogen flame-retardant resin composition.

### Best Mode for Carrying Out the Invention

The polyamide resin (A) in the invention is a polyamide wherein an aminocarboxylic acid, a lactam, or a diamine and a dicarboxylic acid are used as main starting material(s).
As the aminocarboxylic acid, there may be mentioned aminocarboxylic acids having 6 to 12 carbon atoms, and examples thereof include 6-aminocapronic acid, 7-aminoheptanoic acid, 9-aminononanoic acid, 11-aminoundecanoic acid, 12-aminododecanoic acid, and the like.
As the lactam, there may be mentioned lactams having 6 to 12 carbon atoms, and examples thereof include α-pyrrolidone, ε-caprolactam, ω-laurolactam, ε-enantholactam, and the like.

As the diamine, there may be mentioned aliphatic, alicyclic, and aromatic diamines, such as tetramethylenediamine, hexamethylenediamine, 2-methylpentamethylenediamine, nonamethylenediamine, undecamethylenediamine, dodecamethylenediamine, 2,2,4-trimethylhexamethylenediamine, 2,4,4-trimethylhexamethylenediamine, 5-methylnonamethylenediamine, 1,3-bis(aminomethyl)cyclohexane, 1,4-bis(aminomethyl)-cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, aminoethylpiperazine, m-xylylenediamine, and p-xylylenediamine.
As the dicarboxylic acid, there may be mentioned aliphatic, alicyclic, and aromatic dicarboxylic acids, such as adipic acid, glutaric acid, pimelic acid, suberic acid, azelaic acid, sebacic acid, dodecanedioic acid, 1,4-cyclohexanedicarboxylic acid, terephthalic acid, isophthalic acid, phthalic acid, and naphthalenedicarboxylic acid.

In the invention, polyamide homopolymers or copolymers derived from these starting materials may be used singly or in a mixture form.
Specific examples of the polyamide resins for use in the invention include polyamide 6, polyamide 46, polyamide 66, polyamide 610, polyamide 612, polyamide 11, polyamide 12, or polyamide 6/66, polynonamethyleneterephthalamide (polyamide 9T), polyhexamethyleneadipamide/polyhexamethyleneterephthalamide copolymer (polyamide 66/6T), polyhexamethyleneterephthalamide/polycaproamide copolymer (polyamide 6T/6), polyhexamethyleneadipamide/polyhexamethyleneisophthalamide copolymer (polyamide 66/6I), polyhexamethyleneisophthalamide/polycaproamide copolymer (polyamide 6I/6), polydodecamide/polyhexamethyleneterephthalamide copolymer (polyamide 12/6T), polyhexamethyleneadipamide/polyhexamethyleneterephthalamide/polyhexamethyleneisophthalamide copolymer (polyamide 66/6T/6I), polyhexamethyleneterephthalamide/polyhexamethyleneisophthalamide copolymer (polyamide 6T/6I), polyhexamethyleneterephthalamide/poly(2-methylpentamethyleneterephthalamide) copolymer (polyamide 6T/M5T), polyxylyleneadipamide (polyamide MXD6), and mixtures and copolymer resins thereof. As particularly useful ones, there may be mentioned polyamide 6, polyamide 46, polyamide 66, polyamide 610, polyamide 612, polyamide 11, polyamide 12, and polyamide 6/66.

The mixing ratio of the polyamide resin (A) for use in the invention is suitably from 30 to 80% by weight, preferably from 40 to 60% by weight relative to the whole resin composition. When the mixing ratio of the polyamide resin (A) is less than 30% by weight, moldability is poor and satisfactory material properties are not obtained, so that the case is not preferred. When the ratio exceeds 80% by weight, a sufficient flame retardancy is not obtained, so that the case is not preferred.

As the polyamide resin for use in the invention, those having a specific range of polymerization degree, i.e., relative viscosity are preferred. Preferable relative viscosity ranges from 1.8 to 5.0, particularly preferably from 2.0 to 4.5 as a value measured in accordance with JIS K 6920. When the relative viscosity is too low, material strength decreases and when the relative viscosity is too high, flowability decreases and moldability and product appearance are sometimes impaired, so that these cases are not preferred.

The flame retardant (B) in the invention contains (b1) a phosphinic acid salt represented by the following formula (I) and/or (b2) a diphosphinic acid salt represented by the following formula (II) and/or a polymer comprising at least one of these (b1) and (b2) as a component B1 and contains (b3) a melamine condensation product and/or (b4) a reaction product of melamine with phosphoric acid and/or (b5) a reaction product of a melamine condensation product with phosphoric acid and/or a mixture comprising at least two of these (b3) to (b5) as a component B2.

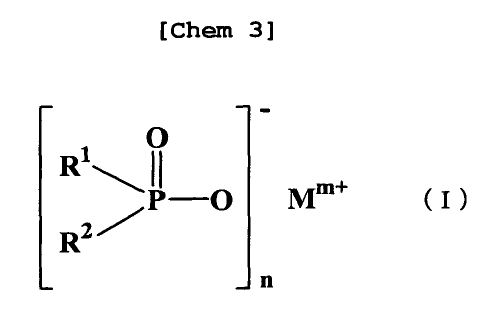

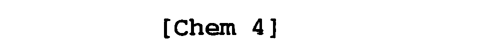

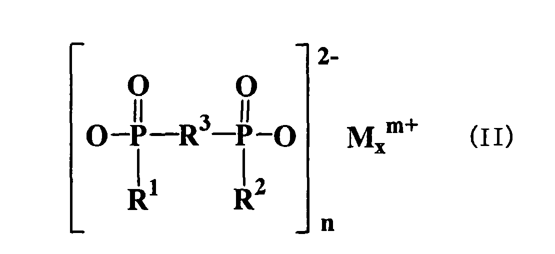

In the component B1, R¹ and R² are preferably the same or different and are linear or branched C₁-C₆ alkyl and/or aryl. Particularly preferably, they are the same or different and are methyl, ethyl, n-propyl, isopropyl, n-butyl, tert-butyl, n-pentyl, and/or phenyl.

R³ is linear or branched C₁-C₁₀ alkylene, C₆-C₁₀ arylene, C₆-C₁₀ alkylarylene, or C₆-C₁₀ arylalkylene, and is preferably methylene, ethylene, n-propylene, isopropylene, n-butylene, tert-butylene, n-pentylene, n-octylene, n-dodecylene, or phenylene or naphthylene, or methylphenylene, ethylphenylene, tert-butylphenylene, methylnaphthylene, ethylnaphthylene, or tert-butylnaphthylene, or phenylmethylene, phenylethylene, phenylpropylene, or phenylbutylene.

M is a calcium ion, a magnesium ion, an aluminum ion, and/or a zinc ion, and is preferably an aluminum ion or a zinc ion.

The term "phosphinic acid salt" used in the following includes salts of phosphinic acid and diphosphinic acid and polymers thereof.
The phosphinic acid salt is produced in an aqueous medium and is essentially a monomeric compound. Moreover, depending on the reaction conditions, polymeric phosphinic acid salts having a condensation degree of 1 to 3 are also included according to environment.
Examples of the phosphinic acid suitable as a component of the phosphinic acid salt include dimethylphosphinic acid, ethylmethylphosphinic acid, diethylphosphinic acid, isobutylmethylphosphinic acid, octylmethylphosphinic acid, methyl-n-propylphosphinic acid, methane-1,2-di(methylphosphinic acid), ethane-1,2-di(methylphosphinic acid), hexane-1,6-di(methylphosphinic acid), benzene-1,4-di(methylphosphinic acid), methylphenylphosphinic acid, and diphenylphosphinic acid.

The phosphinic acid salt of the invention can be produced by known methods, for example, a method detailed in European Patent Application Laid-Open No. 699708. In this case, the phosphinic acid is produced in an aqueous solution using a metal carbonate, a metal hydroxide, or a metal oxide.

The component B2 is preferably (b3) a melamine condensation product, more preferably melem, melam, mellon, and/or a more highly condensed product thereof or the component B2 is preferably (b4) a reaction product of melamine with phosphoric acid and/or (b5) a reaction product of a melamine condensation product with phosphoric acid or a mixture comprising at least two of these (b3) to (b5), wherein the reaction product is preferably dimelamine pyrophosphate, melamine polyphosphate, melem polyphosphate, melam polyphosphate, and/or this kind of mixed polymeric salt. Particularly preferred is melamine polyphosphate having a chain length of longer than 2, particularly longer than 10.

With regard to the mixing amount of the flame retardant (B) for use in the invention, the above components B1 and B2 are added independently from each other in an amount of suitably from 1 to 30% by weight, preferably from 3 to 20% by weight, more preferably from 3 to 15% by weight relative to the whole of the resin composition.

Red phosphorus, the component (C) for use in the invention preferably has an average particle diameter of 1 to 50 µm. Particularly, in order to inhibit decrease of mechanical strength and generation of phosphine, it is preferred to use red phosphorus which is subjected to surface treatment according to need and has a smooth particle surface. However, the presence of surface treatment, the kind of surface-treating agent, the method of surface treatment, and the surface properties of particles are not particularly limited.

The mixing amount of the above red phosphorus (C) is preferably from 1 to 20% by weight, particularly from 3 to 10% by weight relative to the whole of the resin composition. When the amount of the component (C) is less than 1% by weight, flame retardancy is not sufficiently imparted, so that the case is not preferred. When the amount exceeds 20% by weight, problems such as generation of phosphine at molding become serious, so that the case is not preferred.

As the impact-resistant material that is the component (D) for use in the invention, there may be mentioned those generally called rubbers or elastomers and specific examples thereof include olefinic elastomers such as EPR (ethylene/propylene copolymer), EPDM (ethylene/propylene/diene copolymer), EBR (ethylene/butene copolymer), and EOR (ethylene/octene copolymer); styrene-based elastomers such as SBS (styrene/butylene/styrene block copolymer), SEBS (styrene/ethylene/butyrene/styrene block copolymer), SEPS (styrene/ethylene/propylene/styrene block copolymer), and SIS (styrene/isoprene/styrene copolymer); α-olefin/(unsaturated carboxylic acid and/or unsaturated carboxylic acid ester)s such as EEA (ethylene/ethyl acrylate copolymer), EMA (ethylene/methyl acrylate copolymer), EAA (ethylene/acrylic acid copolymer), and EMAA (ethylene/methyl methacrylate copolymer); and impact-resistant materials such as ionomers. It is also possible to use two or more of these impact-resistant materials in combination. Moreover, the use of these impact-resistant materials after they are subjected to acid modification with a dicarboxylic acid such as maleic acid or itaconic acid or an anhydride thereof is preferred in view of obtaining more excellent mechanical strength.

The mixing amount of the above impact-resistant material (D) is preferably from 5 to 30% by weight, particularly preferably from 10 to 20% by weight relative to the whole resin composition. When the amount of the component (D) is less than 5% by weight, an improving effect of impact properties is not sufficient, so that the case is not preferred. When the amount of the component (D) exceeds 30% by weight, mechanical strength becomes worse, so that the case is not preferred.

As the inorganic filler (E) for use in the invention, there may be mentioned fibrous inorganic materials such as glass fibers, carbon fibers, and whiskers of wollastonite and potassium titanate; inorganic fillers such as montmorillonite, talc, mica, calcium carbonate, silica, clay, kaolin, glass powder, and glass beads; and organic fillers such as various organic or polymeric powders. Preferably, glass fibers or talc are used and more preferred are glass fibers.
As the fibrous filler, the diameter of the fiber is from 0.01 to 20 µm, preferably from 0.03 to 15 µm and the cut length of the fiber is from 0.5 to 10 mm, preferably from 0.7 to 5 mm.

The mixing amount of the above inorganic filler (E) for use in the invention is from 0.5 to 50% by weight, preferably from 5 to 40% by weight, more preferably from 10 to 30% by weight relative to the whole resin composition. When the amount is less than 0.5% by weight, the mechanical strength of the polyamide resin is not sufficiently satisfied, so that the case is not preferred. When the amount is more than 50% by weight, mechanical strength is sufficiently satisfied but moldability and surface conditions become worse, so that the case is not preferred.

The resin composition of the invention may be used as it is as a material for various parts but function-imparting agents such as a heat-resistant agent, a weather-resistant agent, a crystal nucleus agent, a crystallization-accelerating agent, a release agent, a lubricant, an antistatic agent, and a colorant may be used within a range where the purpose thereof is not impaired.

A process for producing the polyamide resin composition of the invention is not particularly limited but there may be mentioned a method of blending (A) a polyamide resin, (B) a flame retardant, (C) red phosphorus, (D) an impact-resistant material, and (E) an inorganic filler beforehand using a mixer such as Henschel mixer, a tumbler, or a ribbon blender, charging the blend into a hopper of a uniaxial or biaxial extruder such as a screw extruder, and melt-kneading the blend or a method of blending any of the above individual components or part thereof beforehand, charging them into a hopper of a uniaxial or biaxial extruder, melting them in the extruder, and then charging the remaining components from a melting zone in the middle of the extruder, followed by melt-kneading.

Moreover, a method for molding the polyamide resin composition of the invention into a molded article is not particularly limited and the polyamide resin composition can be subjected to injection molding using an injection molding machine or to press molding using a press molding machine.

### 1. Components to be used

(A) Polyamide resin
   A1: polyamide 6 (1011FB manufactured by Ube Industries, Ltd.)
   A2: polyamide 6 (1015B manufactured by Ube Industries, Ltd.)
   A3: polyamide 66 (2020B manufactured by Ube Industries, Ltd.)
   A4: polyamide 6I/6T (Glivory G21 manufactured by EMS-CHEMIE)
(B) Flame retardant
   B: Exolit OP1311 (TP) (manufactured by Clariant)
(C) Red phosphorus
   C1: 30% by weight red phosphorus master PA6 resin (Hishigaurd LP Master, Nippon Chemical Industrial Co., Ltd.)
   C2: 50% by weight red phosphorus master PA6 resin (Exolit RP694, Clariant Japan K.K.)
(D) Impact-resistant material
   D1: ethylene/α-olefin copolymer (Tafmer MC 1307, Mitsui Chemicals, Inc.)
(E) Inorganic filler
   E1: carbon fibers (TR06NEB3E manufactured by Mitsubishi Rayon Co., Ltd.)
   E2: glass fibers (ECS03T-249H manufactured by Nippon Electric Glass Co., Ltd.)
(F) Other flame retardant
   F1: magnesium hydroxide (KISUMA5E, Kyowa Chemical Industry Co., Ltd.)

### 2. Production, processing, and test of flame-retardant plastic molding material

The individual components shown in Table 1 were mixed and homogenized at a temperature of 260°C to 300°C (in the case of using PA66) or 240°C to 280°C (in the case of using PA6) in a biaxial screw extruder (ZSK4ZSK40 manufactured by WERNER & PFLEIDERER K.K.). The homogenized polymer extruded product is taken out, cooled in a water bath, and then pelletized.

After sufficiently dried, the resulting molding material was processed at a melting temperature of 280°C to 300°C (in the case of using PA66) or 270°C to 290°C (in the case of using PA6) using an injection molding machine (AUTO SHOTO 100D, FANUC K.K.) to prepare a test piece, which was then tested and rated on the flame retardancy using UL94 test (Underwriters Laboratories).

### [Tensile Strength and Elongation at Break]

The properties were measured by the method in accordance with ASTM D638.

### [Flexural Strength and Flexural Modulus]

The properties were measured by the method in accordance with ASTM D790.

### [Izot Impact Strength]

The property was measured by the method in accordance with ASTM D256.

In Table 1, the test results of the cases where the impact-resistant material and the inorganic filler were added to PA and the flame retardant (B) and red phosphorus were used in combination were shown as Examples 1 to 5. In addition, Comparative Examples 1 and 2 wherein the flame retardant (B) was not used, Comparative Example 3 wherein red phosphorus is not used, and Comparative Example 4 wherein the impact-resistant material was not incorporated were shown.

**[Table 1]**

| | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| PA6 | A1 | 38 | 43 | | | | 38 | 33 | 43 | 48 |
| PA6 | A2 | | | 46 | 35 | | | | | |
| PA66 | A3 | | | | | 35 | | | | |
| Aromatic PA | A4 | 2 | 2 | 5 | | | 2 | 2 | 2 | 2 |
| Flame retardant | B | 15 | 10 | 10 | 15 | 15 | | | 20 | 15 |
| 30% Red phosphorus master | C1 | 10 | 10 | | 10 | 10 | 25 | 10 | | 10 |
| 50% Red phosphorus master | C2 | | | 6 | | | | | | |
| Impact-resistant material | D1 | 10 | 10 | 8 | 10 | 10 | 10 | 10 | 10 | |
| Carbon fibers | E1 | 25 | 25 | 25 | | | 25 | 25 | 25 | 25 |
| Glass fibers | E2 | | | | 30 | 30 | | | | |
| Magnesium hydroxide | F1 | | | | | | | 20 | | |
| Tensile strength | MPa | 150 | 165 | 165 | 150 | 125 | 205 | 170 | 157 | 150 |
| Elongation at break | % | 3 | 3 | 3 | 3 | 2 | 2 | 3 | 3 | 3 |
| Flexural strength | MPa | 210 | 220 | 225 | 215 | 175 | 255 | 230 | 215 | 215 |
| Flexural modulus | GPa | 14.0 | 14.1 | 14.5 | 10.0 | 9.0 | 16.5 | 16.0 | 14.9 | 17.5 |
| Izod impact strength | J/m | 60 | 65 | 60 | 60 | 45 | 40 | 55 | 55 | 38 |
| UL94 | 1/8" | V-0 | V-0 | V-0 | V-0 | V-0 | V-0 | V-1 | V-0 | V-0 |
| | 1/16" | V-0 | V-0 | V-0 | V-0 | V-0 | V-0 | V-1 | V-1 | V-0 |
| | 1/32" | V-0 | V-0 | V-0 | V-0 | V-0 | V-1 | V-1 | V-1 | V-0 |

It is found that the material of Example 1 or 2 achieves a high flame retardant effect without largely impairing mechanical properties such as strength and impact resistance, as compared with the material of Comparative Example 1 or 2 wherein the formulation of the flame retardants is changed.
Moreover, the material of Example 3 or 4 has an equal effect to the material of Examples 1 or 2 even when the kind of polyamide resin is changed, and thus is useful as a non-halogen flame retardant containing no bromine or the like.

Comparative Example 3 is a composition containing the flame retardant (B) without adding red phosphorus and exhibits a low flame retardant effect in the form of a thin molded article. On the other hand, the material of Example 1 or 2 achieves a sufficient flame retardant effect even in the form of a thin molded article.

Comparative Example 4 is a composition containing no impact-resistant material and achieves a flame retardant effect but exhibits a low impact resistance. On the other hand, the material of Example 1 or 2 has an impact resistance equal to or higher than the case where the other flame retardant is used.
While the invention has been described in detail and with reference to specific embodiments thereof, it will be apparent to one skilled in the art that various changes and modifications can be made therein without departing from the spirit and scope thereof.
This application is based on Japanese patent application filed on April 28, 2004 (Application No. 2004-132776), the contents thereof being herein incorporated by reference.

### Industrial Applicability

Since the above flame-retardant resin composition is excellent in flame retardancy and also has excellent impact properties, it can be suitably used in applications, e.g., automobile parts, machine parts, breaker parts, electrical and electronic parts such as power tools, electrical connectors, and personal computer cases, and the like and is industrially extremely useful as a non-halogen flame-retardant resin composition.

## Claims

1. A flame-retardant resin composition comprising:
(A) a polyamide resin;
(B) a flame retardant containing (b1) a phosphinic acid salt represented by the following formula (I) and/or (b2) a diphosphinic acid salt represented by the following formula (II) and/or a polymer comprising at least one of these (b1) and (b2) as a component B1 and containing (b3) a melamine condensation product and/or (b4) a reaction product of melamine with phosphoric acid and/or (b5) a reaction product of a melamine condensation product with phosphoric acid and/or a mixture comprising at least two of these (b3) to (b5) as a component B2;
(C) red phosphorus;
(D) an impact-resistant material; and
(E) an inorganic filler: 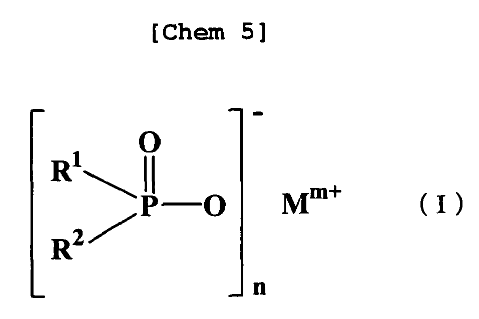 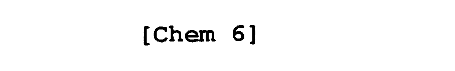 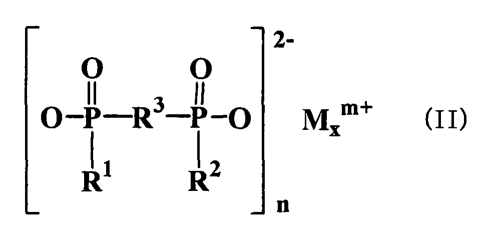
wherein R¹ and R² are the same or different and are linear or branched C₁-C₆ alkyl and/or aryl, R³ is linear or branched C₁-C₁₀ alkylene, C₆-C₁₀ arylene, C₆-C₁₀ alkylarylene, or C₆-C₁₀ arylalkylene, M is a calcium ion, a magnesium ion, an aluminum ion, and/or a zinc ion, m is 2 or 3, n is 1 or 3, and x is 1 or 2.

2. The flame-retardant resin composition according to claim 1, which comprises 30 to 80% by weight of the above polyamide resin (A), 1 to 30% by weight of the component B1 and 1 to 30% by weight of the component B2 of the above flame retardant (B), 1 to 20% by weight of the above red phosphorus (C), 5 to 30% by weight of the above impact-resistant material (D), and 0.5 to 50% by weight of the inorganic filler (E).

3. The flame-retardant resin composition according to claim 1 or 2, wherein the above aliphatic polyamide resin is polyamide 6, polyamide 46, polyamide 66, polyamide 610, polyamide 612, polyamide 11, polyamide 12, or polyamide 6/66.

4. A molded article obtainable by molding the flame-retardant resin composition according to any one of claims 1 to 3.
